(19) Europäisches Patentamt
European Patent Office
Office européen des brevets

(11) **EP 3 712 430 A1**

(12) **EUROPEAN PATENT APPLICATION**

(43) Date of publication:
**23.09.2020 Bulletin 2020/39**

(51) Int Cl.:
***F03D 17/00*** *(2016.01)*

(21) Application number: **19164711.4**

(22) Date of filing: **22.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S
7330 Brande (DK)**

(72) Inventor: **Hansen, Michael Langhoff
7100 Vejle (DK)**

(74) Representative: **Aspacher, Karl-Georg et al
Siemens Gamesa Renewable Energy GmbH & Co.
KG
Otto-Hahn-Ring 6
81739 München (DE)**

(54) **DETECTING WIND TURBINE PERFORMANCE CHANGE**

(57) It is described a method of detecting a performance change of a wind turbine (1), the method comprising: measuring a value (27) of a wind related quantity; estimating a value (47) of the wind related quantity based on at least wind turbine operational data (53) and applying a model; comparing the measured value (27) with the estimated value (47) to derive a residual value (59) of the wind related quantity; and indicating (93, 95, 83, 49) a performance change based on the residual value.

FIG 2

**Description**

Field of invention

The present invention relates to a method of detecting a performance change of a wind turbine, relates to an arrangement for detecting a performance change of a wind turbine and further relates to a wind turbine comprising the arrangement.

Art Background

A wind turbine produces electrical power which is supplied to a utility grid. Thereby, conventionally, the control strategy for a wind turbine is designed to maximize power production output to the utility grid while minimizing structural loads and acoustic noise emissions. To achieve this, the control strategy conventionally relies on the designed aerodynamic capabilities of the wind turbine.

However, during the lifetime of the wind turbine, the aerodynamic capabilities may change due to interfering external influences. If the actual aerodynamic capabilities deviate significantly from the designed (or original) aerodynamic capability (due to for example environmental conditions, model inaccuracy, fouling of turbine blades, etc.), the wind turbine may suffer from a significant performance loss (for example in terms of power production as well as load and noise emission).

Conventionally, a performance loss may have been detected by comparing an average power production over a period of time to a predetermined or expected power. This conventional method may be relatively slow and conservative. Stall detection of a wind turbine blade has been described relying on a sensor to detect vibrations in the blade. The conventional methods of detection of a performance loss are either relatively slow, conservative, unreliable or require special sensor equipment not readily available on a wind turbine.

Thus, there may be a need for a method and an arrangement of detecting a performance change of a wind turbine which can be easily implemented, is performed in a fast manner (such as to allow online application), is reliable and/or has a better accuracy of conventionally known methods and arrangements.

Summary of the Invention

This need may be met by the subject matter according to the independent claims. Advantageous embodiments of the present invention are described by the dependent claims.

According to an embodiment of the present invention it is provided a method of detecting or estimating a performance change or fault or erroneous condition of a wind turbine, the method comprising: measuring a value of a wind related quantity (e.g. wind speed or output power or generator torque); estimating a value of the wind related quantity based on at least wind turbine operational data and applying a (wind turbine performance) model (including a model of expected performance); comparing the measured value with the estimated value to derive a residual value of the wind related quantity; and indicating a performance change based on the residual value, the method in particular being performed for plural consecutive time steps.

The method may detect whether a performance change, in particular a performance loss or degradation and/or a fault and/or an erroneous condition of the wind turbine, is present or not. Further, the method may according to a particular embodiment of the present invention also estimate a performance change, in particular performance degradation of the wind turbine, in the sense that the degree of performance change may be determined. The degree of performance change or performance degradation may for example be quantified in several categories such as low performance degradation, high performance degradation and very high performance degradation or no performance degradation.

The wind related quantity is a quantity which is affected by wind characteristics, in particular wind speed. The wind related quantity may be dependent on the wind speed. The value of the wind related quantity may be measured by a respective sensor or measurement device installed at or close to the wind turbine.

The wind turbine operational data may relate to data defining an operational state of the wind turbine including environmental influence factors, including wind condition.

The estimation may be performed by a processor which is appropriately programmed or which has a program loaded which is executed by the processor. The model may comprise a wind turbine performance model, for example relating the wind related quantity to the wind turbine operational data. Thus, given the wind turbine operational data, the value of the wind related quantity may be estimated or derived, for example using a mathematical formula or a look-up table or any other data structure relating for example the wind turbine operational data with the wind related quantity. The model may have been previously derived based for example on experimental data of an intact errorless wind turbine. The model may reflect the expected performance. The performance change may be a change of the performance from the expected performance to a current performance.

The measured value may for example be compared with the estimated value by forming a difference between the measured value and the estimated value. If there is no performance change, the measured value may substantially be equal or correspond to the estimated value, at least on average. However, if there is a performance change, the measured value may deviate from the estimated value, in particular the stronger the performance change is. The performance change may be indicated by an acoustic, optical and/or haptic signal. For example, an alarm (acoustic, optical) may be raised if the method detects a performance change, in particular a performance change having a predetermined strength or level or degree.

All method steps may be continuously performed for plural consecutive time steps. The method may be performed online during operation of the wind turbine or may be performed offline, thereby for example processing data previously obtained from one or more wind turbines and stored.

The estimation of the value of the wind related quantity may for example be performed as has been described in US 2012/0078518 A1. Thereby, the wind speed of a wind driving a wind turbine is described to be estimated including measuring a current power generated by the wind turbine, measuring a current rotor speed of a rotor of the wind turbine and measuring a current blade pitch angle of a rotor blade of the rotor. According to this embodiment, the wind related quantity is the wind speed. For example, a three-dimensional reference look-up table comprising three orthogonal axes may be pregiven, wherein the first axis denotes a rotor speed, the second axis denotes a wind speed and the third axis denotes the blade pitch angle. The values of the three-dimensional reference look-up table may denote the power which can be generated by the wind turbine depending on the wind speed, the rotor speed and the blade pitch angle. The reference look-up table may also be called or referred to as Cp look-up table. The look-up table may have been determined previously by monitoring operation of the intact wind turbine. In other embodiments, the model may be implemented in a manner different from a look-up table.

According to an embodiment of the present invention, the wind related quantity comprises one of: a wind speed; a wind turbine output power; a wind turbine generator torque. In particular, the wind related quantity may be either one of a wind speed, a wind turbine output power, a wind turbine generator torque. Any of these examples of wind related quantities may be measured as well as may be estimated. To each of these examples of wind related quantities, respective corresponding wind turbine operational data may be provided based on which the respective example of the wind related quantity may be derived or estimated. It may be advantageous to use the wind speed as the wind related quantity, since for the wind speed, a reliable estimation algorithm may be known, as has been described above.

According to an embodiment of the present invention, the wind turbine operational data comprise at least one of: a wind turbine output power; a rotational speed of the generator or rotor; a rotor blade pitch angle; a wind speed. If the wind related quantity is the wind speed, for example the operational data may include values for the power output, the rotational speed and the pitch angle. In other cases of the wind related quantity, for example being the wind turbine power or the generator torque, also the wind speed may be included in the operational data. Thereby, these wind turbine operational data may be easily available in a conventional wind turbine and thus enable to implement the method in a simple manner.

According to an embodiment of the present invention, the residual value of the wind related quantity is determined by subtracting the estimated value from the measured value. Thereby, a difference between the estimated value and the measured value of the wind related quantity may be derived. The difference (or the residual value) may be indicative of the presence or the absence of a performance change.

The performance change may for example in other embodiments be a performance gain in which case the residual value may have an opposite sign to the case where the performance change is a performance loss. Thus, the sign of the residual value may be indicative of whether the performance change is a performance gain or a performance loss.

According to an embodiment of the present invention, the method further comprises filtering, in particular low pass filtering and/or applying a moving average filter, the residual value over several time steps to obtain, in particular for each time step, a filtered residual value, wherein indicating a performance change is based on the filtered residual value.

By filtering, high frequency components of the residual value may be decreased in amplitude or even be completely removed. Thereby, measurement errors or very rapid changes of the performance change may be disregarded, thereby increasing the accuracy and/or reliability of the method. Further, the number of false positives may be reduced by the filtering.

According to an embodiment of the present invention, the method further comprises deriving a statistical characteristics of the residual value or the filtered residual value over plural time steps, in particular including a mean and/or a standard deviation; and comparing the derived statistical characteristics with an expected statistical characteristics, based on which the performance change is detected.

The statistical characteristics may include one or more statistical parameters which describe the development or evolvement or distribution of the residual value over several time points or time steps. Considering the statistical characteristics of the residual value may be statistically more relevant and indicative than considering the residual value as such even for different time points. In particular, fluctuations due to measurement errors may thereby be eliminated. The expected statistical characteristics may be derived from experimental data of an intact wind turbine under known environmental conditions, in particular accurately known wind speed.

According to an embodiment of the present invention, deriving the statistical characteristics includes deriving at least one residual cumulative sum by deriving at least one cumulative sum of the residual value or the filtered residual value, wherein indicating a performance change is based on the at least one residual cumulative sum, wherein the at least one residual cumulative sum in particular comprises an upper residual cumulative sum and/or a lower residual cumulative sum.

The cumulative sum (CUSUM) is a conventionally known sequential analysis technique which is used for monitoring change detection. CUSUM was developed to determine changes in the mean of a value. The cumulative sum may be easily implementable. Furthermore, the cumulative sum may reliably indicate a significant change in the residual value which may in turn allow to reliably determine or detect whether a performance change occurred.

According to an embodiment of the present invention, the method further comprises comparing the at least one residual cumulative sum, in particular for at least one time step, to a threshold to obtain a comparison result, wherein indicating a performance change is based on the comparison result.

For example, the upper cumulative sum may be compared to a high threshold and/or the lower cumulative sum may be compared to a low threshold. If either or both of the upper cumulative sum and the lower cumulative sum is above or below the high threshold or the low threshold, respectively, the presence of a significant performance change may be indicated. Furthermore, several high thresholds and several low thresholds may be predefined. If for example the upper cumulative sum exceeds a first high threshold, it may be indicated that there is a low performance change, if the cumulative sum exceeds a second high threshold, it may be indicated that the performance change is of intermediate degree and if the cumulative sum exceeds a third high threshold, it may be indicated that the performance change is of very high degree.

In other embodiments, a binary decision may be taken in the sense that only a single threshold is defined relating to the upper cumulative sum. If the upper cumulative sum for example exceeds the single threshold, it may be indicated that there is a significant performance change.

According to an embodiment of the present invention, the wind related quantity is a wind speed, wherein the wind turbine operational data comprise a wind turbine output power and a rotational speed of a rotor or a generator and a rotor blade pitch angle, wherein the performance model relates values of a wind turbine output power and a rotational speed of generator or a rotor and a rotor blade pitch angle to estimated values of the wind speed. Thereby, the method may apply the conventionally known wind speed detection method as is described in US 2012/0078518 A1.

According to an embodiment of the present invention, the wind related quantity is a wind turbine output power, wherein the wind turbine operational data comprise a wind speed and a rotational speed of a rotor or a generator and a rotor blade pitch angle, wherein the performance model relates values of a wind speed and a rotational speed of generator or a rotor and a rotor blade pitch angle to estimated values of the wind turbine output power.

According to a further embodiment of the present invention, the wind related quantity is a generator torque, wherein the wind turbine operational data comprise a wind speed and a rotational speed of a rotor or a generator and a rotor blade pitch angle, wherein the performance model relates values of a wind speed and a rotational speed of generator or a rotor and a rotor blade pitch angle to estimated values of the generator torque.

The wind turbine output power or the generator torque may be alternatives which may on one hand be measured and on the other hand be estimated, in particular using a same or similar relationship between the four quantities wind speed, wind turbine output power (or torque), rotational speed and rotor blade pitch angle which is also used for estimating the value of the wind speed based on the output power, the rotational speed and the blade pitch angle. As power is equal to torque times rotational speed, either the output power or the generator torque may be utilized in the calculation.

According to an embodiment of the present invention, the method is performed offline or online and/or the performance change is due to rotor blade stalling and/or rotor blade icing and/or a rotor blade contamination and/or a control error and/or an actuation error and/or a configuration error and/or a sensor error. Thereby, the method is enabled to detect a performance change which may be due to different reasons, thereby extending the applicability of the method.

According to an embodiment of the present invention it is provided a method of controlling a wind turbine, comprising: performing a method according to one of the preceding embodiments and taking an action based on the estimated performance change. The action taken may for example involve controlling the wind turbine and/or inspecting a rotor blade for icing and/or contamination and/or inspecting one or more measurement sensors and/or inspecting a control algorithm and/or configuration data and/or changing a control algorithm.

It should be understood, that features, individually or in any combination, disclosed, described or explained with respect to a method of detecting a performance change may also be applied, individually or in any combination, to an arrangement for detecting a performance change of a wind turbine according to an embodiment of the present invention and vice versa.

According to an embodiment of the present invention it is provided an arrangement for detecting a performance change of a wind turbine, the method comprising: an input module adapted to receive a measured value of a wind related quantity; a processor adapted: to estimate a value of the wind related quantity based on at least wind turbine operational data and applying a model; to compare the measured value with the estimated value to derive a residual value of the wind related quantity; and to output a signal indicating a performance change based on the residual value.

The arrangement may comprise software and/or hardware. The arrangement may be configured to carry out the method according to one of the above-described embodiments. The arrangement may for example be part of a wind turbine controller.

According to an embodiment of the present invention it is provided a wind turbine, comprising: a rotor at which plural rotor blades are mounted; a generator coupled to the rotor; an anemometer; and an arrangement according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not limited to the described or illustrated embodiments.

Fig. 1 schematically illustrates a wind turbine according to an embodiment of the present invention comprising an arrangement for detecting a performance change according to an embodiment of the present invention;

Figs. 2, 3 and 4 schematically illustrate portions of the wind turbine illustrated in Fig. 1 or the arrangement for detecting a performance change according to an embodiment of the present invention.

Detailed Description

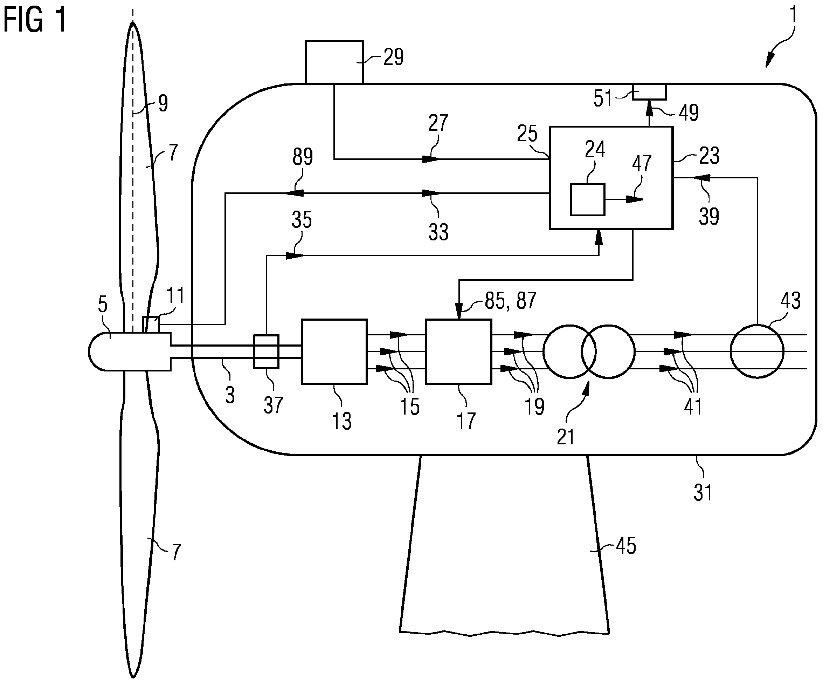

The wind turbine 1 according to an embodiment of the present invention illustrated in Fig. 1 in a schematic form comprises a rotor 3 having a coupled hub 5 at which plural rotor blades 7 are mounted. The rotor blades 7 are rotatable around a pitch angle axis 9 by using a pitching system 11 which comprises an actuator for actually adjusting the pitch angle and further may also comprise a pitch angle measurement portion for measuring the adjusted pitch angle. The wind turbine 1 further comprises a generator 13 which is coupled to the rotor 3. The generator 13 outputs a three-phase power stream 15 and supplies it to a converter 17 which may comprise a AC-DC portion, a DC link and a DC-AC portion for converting the variable frequency power stream 15 to a substantially fixed frequency power stream 19 which is supplied to a wind turbine transformer 21 to transform the output stream to a higher voltage output stream 41.

The wind turbine 1 further comprises an arrangement 23 for detecting a performance change of the wind turbine according to an embodiment of the present invention. Thereby, the arrangement 23 (e.g. being part of a wind turbine controller) comprises an input portion comprising input terminals 25 which are adapted to receive a value 27 of a wind related quantity, in particular a wind speed Vwind,meas as is measured by an anemometer 29. The anemometer 29 is in the illustrated embodiment mounted at a nacelle 31 which harbours the rotor 3, the generator 13, the converter 17, the transformer 21 as well as the arrangement 23.

The input section comprising the input terminals 25 of the arrangement 23 is further configured to receive a blade pitch measurement signal 33 from the pitching system 11, to receive a rotor speed measurement signal 35 from a rotational speed measurement device 37 and further receive an output power measurement signal 39 of the output power 41 from an electrical measurement system 43 arranged downstream the transformer 21. The nacelle 21 is mounted on top of a wind turbine tower 45.

The arrangement 23 is configured to estimate a value of the wind speed 47 based on the pitch angle measurement signal 33, the rotational speed measurement signal 35 and the power output signal 39. Thereby, the arrangement 23 comprises a processor 24 which estimates and outputs the estimated value 47 of the wind speed. Further, the processor 24 is configured to compare the measured value 27 of the wind speed with the estimated value 47 of the wind speed to derive a residual value of the wind speed. Further, the arrangement 23 indicates a performance change based on the residual value and thereby outputs a respective indicating signal 49 for example to a display device 51.

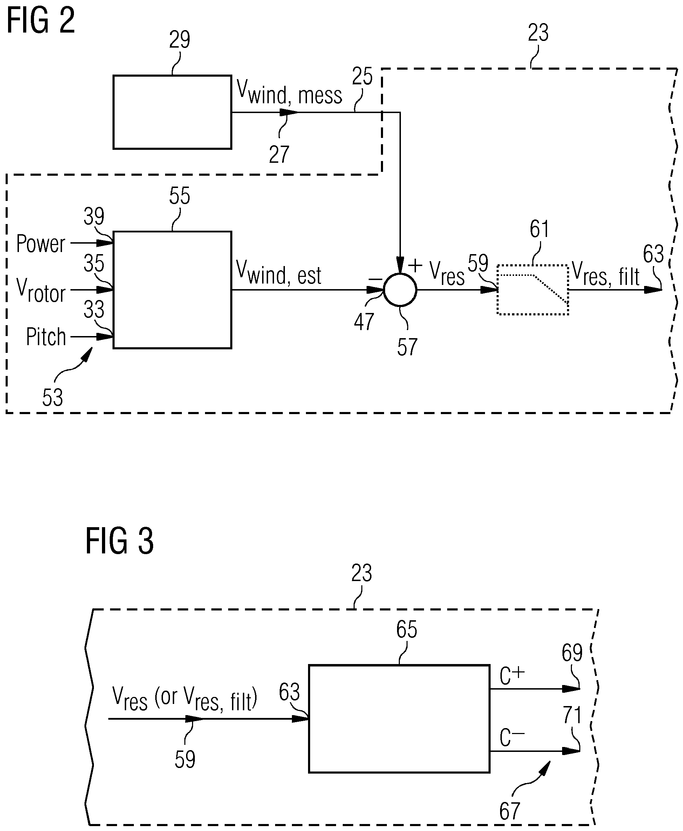

In the embodiment illustrated in Fig. 1, the wind related quantity is the wind speed, however, in other embodiments, the wind related quantity may be the wind turbine output power or the wind turbine generator torque, i.e. the torque of the generator 13. The measured pitch angle signal 33, the measured rotational speed signal 35 and the measured output power 39 represent an example of wind turbine operational data collectively referred to as signal 53 (see Fig. 2).

Fig. 2 schematically illustrates a portion of the wind turbine including a portion of the arrangement 23. The arrangement 23 comprises a wind estimation module 55 which receives the wind turbine operational data 53, in particular the output power signal 39, the rotational speed measurement signal 35 and the pitch angle measurement system 33. Via the input terminal 25, the arrangement 23 receives the wind speed measurement signal 27 from the anemometer 29. Using a subtraction element 57 of the arrangement 23, the estimated wind speed 47 is subtracted from the measured wind speed 27 to obtain a residual value 59 of the wind speed.

The arrangement 23 further comprises a filter 61 which is configured for low pass filtering and/or applying a moving average of the residual value 59 over several time steps to obtain a filtered residual value 63, in particular for every time step i. It should be noted, that the wind speed measurement signal 27 as well as the wind turbine operational data 53 are continuously determined for several time steps as labelled with the index i in the following.

Fig. 3 shows another portion of the arrangement 23 which may be comprised in the arrangement 23 as is illustrated in Fig. 1. The residual value 59 of the wind speed or the filtered residual value 63 of the wind speed is supplied to a cumulative sum calculation model 65 which may be (for example in software) comprised in the arrangement 23. The cumulative sum calculation model 65 calculates, in particular for every time step, an upper cumulative sum as well as a lower cumulative sum $C^+(i)$, $C^-(i)$, for example as follows:

$$C^+(i) = \begin{cases} 0 & , i = 0 \\ \max\left(0, C^+(i-1) + V_{res}(i) - \hat{\mu}_0 - \dfrac{\delta\sigma_0}{2}\right) & , i > 1 \end{cases}$$

$$C^-(i) = \begin{cases} 0 & , i = 0 \\ \min\left(0, C^-(i-1) + V_{res}(i) - \hat{\mu}_0 + \dfrac{\delta\sigma_0}{2}\right) & , i > 1 \end{cases}$$

Deriving the cumulative sum is one example of deriving a statistical characteristics of the residual value 59 of the wind speed or the filtered residual value 63 of the wind speed. The statistical characteristics is collectively labelled with reference sign 67. The upper cumulative sum 69 as well as the lower cumulative sum 71 are output by the cumulative sum determination model 65.

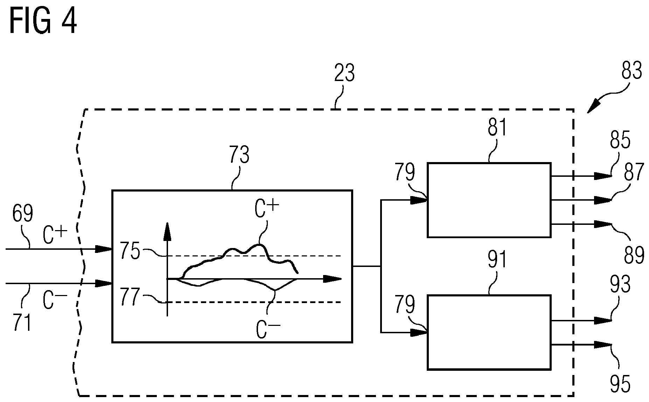

Fig. 4 schematically illustrates a further portion of the arrangement 23 which further processes the upper cumulative sum 69 as well as the lower cumulative sum 71. The portion of the arrangement as illustrated in Fig. 4 comprises a comparison module 73 for comparing at least one residual cumulative sum 69, 71 to a threshold 75, 77 to obtain a comparison result which is output from the comparison module 73 and labelled with reference sign 79. The comparison result 79 is one example of an indicating signal 49 which indicates whether a performance change is present and also whether a performance degradation or a performance loss is present or not. The thresholds 75, 77 may be adjusted depending on the application. Further, according to different embodiments, different thresholds for different levels of performance changes may be predefined allowing to at least coarsely quantify the performance change.

The arrangement further comprises a control corrective action module 81 which receives the comparison result 79 and derives values of control parameters collectively referred to as reference sign 83. The control parameters may for example comprise a reference of a speed set point 85, a reference of a power/torque set point 87 and/or a reference for a pitch angle 89.

The comparison result 79 is further supplied to a user notification module 91 which may for example comprise the display 51 illustrated in Fig. 1. The user notification module 91 may output a warning 93 or an alarm 95 which may for example be displayed on the display 51 illustrated in Fig. 1.

In the following, one particular embodiment is described in further detail also referring to Figs. 2, 3 and 4, without limiting the invention:

The detection algorithm may consist of three steps:

1. Calculate residual between measured and estimated wind speed. The residual of the measured and estimated power/torque can be used as an alternative.

2. Evaluate changes to the statistical properties (mean, variance, etc.) of the residual over time.

3. Detect if the change in the statistical properties (mean, variance, etc.) of the residual exceeds a certain threshold and take corrective control action and/or provide relevant notifications.

The three steps are described in more details in the following.

Step 1:

In the first step, the residual between the measured and estimated wind speed is calculated.

The wind estimation in the turbine may be done based on a Cp curve as describe in US 2012/0078518.

The Wind Estimator functions as a digital twin for the turbine and the mapping from power, rotor speed and pitch angle to wind speed through Cp curves represents the expected performance of the turbine. Due to measurement noise and the fact that the anemometer provides a point measurement while the Wind Estimator provides a wind speed averaged across the rotor plane, there will always be some deviations between the measured and estimated wind speed. To increase robustness towards single outliers in the residual caused by e.g. brief sensor outage, communication delays or similar, a low pass filter or moving average filter can be introduced and applied to the calculated residual.

A block diagram for Step 1 is illustrated in Fig. 2.

Step 2:

Under normal operating conditions, the wind speed residual (Vres) will have certain statistical characteristics expressed through e.g. mean and standard deviation. A significant shift in these characteristics indicates that something has changed in the relationship between the estimated and measured performance (in this case expected performance is expressed through estimated wind speed but could also be based on other measures such as power/torque).

Changes of the statistical properties of the residual can be detected by use of the cumulative sum (CUSUM) approach, but other methods can be applied in this step as well, such as the exponentially weighted moving average (EWMA). If using the CUSUM approach for detecting changes to the mean of the residual, the upper cumulative sum is calculated as:

$$C^+(i) = \begin{cases} 0 & ,i = 0 \\ \max\left(0, C^+(i-1) + V_{res}(i) - \hat{\mu}_0 - \dfrac{\delta\sigma_0}{2}\right) & ,i > 1 \end{cases}$$

where Po is the target (expected) mean of Vres under normal operation, $\sigma_0$ is the target (expected) standard deviation of Vres under normal operation, while $\delta$ is the minimum amount of shift from the target mean that should be detected expressed as a multiple of the target standard deviation. The lower cumulative sum can be calculated in a similar way:

$$C^-(i) = \begin{cases} 0 & ,i = 0 \\ \min\left(0, C^-(i-1) + V_{res}(i) - \hat{\mu}_0 + \dfrac{\delta\sigma_0}{2}\right) & ,i > 1 \end{cases}$$

A block diagram for Step 2 is illustrated in Fig. 3.

Step 3:

The upper and lower cumulative sums are compared to a threshold limit indicating when performance of the turbine is deviating significantly from what is expected. This can be expressed in a multiple of standard deviations from the target mean.

When the limit is exceeded, it is possible to take corrective actions when conditions permit this. This could be by changing the operating point of the turbine by modifying the speed, power (torque) or pitch set-point. This can be supplemented by user notification through a warning or an alarm. For offline application of this method, only the user notification may be relevant.

A block diagram for Step 3 is illustrated in Fig. 4.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of detecting a performance change of a wind turbine (1), the method comprising:

   measuring a value (27) of a wind related quantity;
   estimating a value (47) of the wind related quantity based on at least wind turbine operational data (53) and applying a model;
   comparing the measured value (27) with the estimated value (47) to derive a residual value (59) of the wind related quantity; and
   indicating (93, 95, 83, 49) a performance change based on the residual value,

   the method in particular being performed for plural consecutive time steps (i).

2. Method according to the preceding claim, wherein the wind related quantity comprises one of:

   a wind speed (Vwind, 27);
   a wind turbine output power (power, 39);
   a wind turbine generator torque.

3. Method according to one of the preceding claims, wherein the wind turbine operational data (53) comprise at least one of:

   a wind turbine output power (39);
   a rotational speed (35) of the generator or rotor;
   a rotor blade pitch angle (33);
   a wind speed (Vwind, 27).

4. Method according to one of the preceding claims, wherein the residual value (59) of the wind related quantity is determined by subtracting (57) the estimated value (47) from the measured value (27).

5. Method according to one of the preceding claims, further comprising:
   filtering (61), in particular low pass filtering and/or applying a moving average filter, the residual value (59) over several time steps to obtain, in particular for each time step, a filtered residual value (63),
   wherein indicating a performance change is based on the filtered residual value.

6. Method according to one of the preceding claims, further comprising:

   deriving a statistical characteristics (67) of the residual value (59) or the filtered residual value (63) over plural time steps, in particular including a mean and/or a standard deviation;
   comparing the derived statistical characteristics with an expected statistical characteristics, based on which the performance change is detected.

7. Method according to the preceding claim,

   wherein deriving the statistical characteristics includes deriving at least one residual cumulative sum (C+, C-) by deriving at least one cumulative sum of the residual value or the filtered residual value,
   wherein indicating a performance change is based on the at least one residual cumulative sum (C+, C-),

   wherein the at least one residual cumulative sum in particular comprises an upper residual cumulative sum and/or a lower residual cumulative sum.

8. Method according to the preceding claim, further comprising:

   comparing the at least one residual cumulative sum (C+, C-), in particular for at least one time step, to a threshold (75, 77) to obtain a comparison result (79),
   wherein indicating a performance change is based on the comparison result.

9. Method according to one of the preceding claims 1 to 8, wherein the wind related quantity is a wind speed (Vwind), wherein the wind turbine operational data (53) comprise a wind turbine output power (39) and a rotational speed (35) of a rotor or a generator and a rotor blade pitch angle (33), wherein the performance model (Cp) relates values of a wind turbine output power and a rotational speed of generator or a rotor and a rotor blade pitch angle to estimated values of the wind speed.

10. Method according to one of the preceding claims 1 to 8, wherein the wind related quantity is a wind turbine output power, wherein the wind turbine operational data comprise a wind speed and a rotational speed of a rotor or a generator and a rotor blade pitch angle,
wherein the performance model relates values of a wind speed and a rotational speed of generator or a rotor and a rotor blade pitch angle to estimated values of the wind turbine output power.

11. Method according to one of the preceding claims 1 to 8, wherein the wind related quantity is a generator torque, wherein the wind turbine operational data comprise a wind speed and a rotational speed of a rotor or a generator and a rotor blade pitch angle,
wherein the performance model relates values of a wind speed and a rotational speed of generator or a rotor and a rotor blade pitch angle to estimated values of the generator torque.

12. Method according to one of the preceding claims, performed offline or online and/or
wherein the performance change is due to rotor blade stalling and/or rotor blade icing and/or a rotor blade contamination and/or a control error and/or an actuation error and/or a configuration error and/or a sensor error.

13. Method of controlling a wind turbine, comprising:

performing a method according to one of the preceding claims; and
taking an action (83) based on the estimated performance change.

14. Arrangement (23) for detecting a performance change of a wind turbine (1), the method comprising:

an input module (25) adapted to receive a measured value (27) of a wind related quantity;
a processor (24) adapted:

to estimate a value (47) of the wind related quantity based on at least wind turbine operational data (53) and applying a model (Cp);
to compare the measured value (27) with the estimated value (47) to derive a residual value (59) of the wind related quantity; and
to output a signal (83, 93, 95, 49) indicating a performance change based on the residual value.

15. Wind turbine (1), comprising:

a rotor (3) at which plural rotor blades (7) are mounted;
a generator (13) coupled to the rotor (3);
an anenometer (29); and
an arrangement (23) according to the preceding claim.

FIG 1

EP 3 712 430 A1

FIG 2

FIG 3

FIG 4

Europäisches
Patentamt

European
Patent Office

Office européen
des brevets

# EUROPEAN SEARCH REPORT

Application Number

EP 19 16 4711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/077155 A1 (CLAUSEN PALLE [DK] ET AL) 19 March 2015 (2015-03-19) * paragraphs [0008] - [0009], [0018] - [0019], [0031] - [0032], [0040], [0052], [0075] - [0076] * | 1-5,9-15 | INV. F03D17/00 |
| X | EP 2 514 969 A2 (HONEYWELL INT INC [US]) 24 October 2012 (2012-10-24) * paragraphs [0001], [0008], [0016] - [0017], [0027] - [0035], [0039] - [0041], [0044]; figure 2 * | 1-15 | |
| X | US 2011/025062 A1 (LLOMBART ESTOPINAN ANDRES [ES] ET AL) 3 February 2011 (2011-02-03) * paragraphs [0012], [0014] - [0023], [0028], [0040], [0048], [0088]; table 1 * | 1-15 | |
| X A | US 2018/335019 A1 (KNUDSEN SVEN JESPER [DK] ET AL) 22 November 2018 (2018-11-22) * paragraphs [0008], [0010] - [0018], [0030] - [0033], [0041], [0047] - [0048], [0068] - [0072]; figure 2 * | 1,14 12 | TECHNICAL FIELDS SEARCHED (IPC) F03D |
| X A | US 2011/313726 A1 (PARTHASARATHY GIRIJA [US] ET AL) 22 December 2011 (2011-12-22) * paragraphs [0003], [0027], [0037] - [0039], [0047] - [0049] * | 1,14 12 | |
| A | US 2016/084233 A1 (EVANS SCOTT CHARLES [US] ET AL) 24 March 2016 (2016-03-24) * paragraphs [0010], [0033] - [0038], [0041] - [0043], [0049]; figures 3, 5 * | 2,3,6-12 | |
| A | US 2013/214535 A1 (BRATH PER [DK]) 22 August 2013 (2013-08-22) * paragraphs [0007], [0031] - [0033] * | 1,2,14, 15 | |

The present search report has been drawn up for all claims

| Place of search | Date of completion of the search | Examiner |
|---|---|---|
| The Hague | 11 September 2019 | Ducloyer, Stéphane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 16 4711

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2019

| Patent document cited in search report | | Publication date | Patent family member(s) | | Publication date |
|---|---|---|---|---|---|
| US 2015077155 | A1 | 19-03-2015 | CN 104454380 A<br>EP 2851561 A1<br>US 2015077155 A1 | | 25-03-2015<br>25-03-2015<br>19-03-2015 |
| EP 2514969 | A2 | 24-10-2012 | CN 102748219 A<br>EP 2514969 A2<br>US 2012271593 A1 | | 24-10-2012<br>24-10-2012<br>25-10-2012 |
| US 2011025062 | A1 | 03-02-2011 | CN 102165187 A<br>ES 2327488 A1<br>US 2011025062 A1<br>WO 2009127764 A1 | | 24-08-2011<br>29-10-2009<br>03-02-2011<br>22-10-2009 |
| US 2018335019 | A1 | 22-11-2018 | CN 108291529 A<br>EP 3380724 A1<br>US 2018335019 A1<br>WO 2017088877 A1 | | 17-07-2018<br>03-10-2018<br>22-11-2018<br>01-06-2017 |
| US 2011313726 | A1 | 22-12-2011 | NONE | | |
| US 2016084233 | A1 | 24-03-2016 | US 2016084233 A1<br>WO 2016048876 A1 | | 24-03-2016<br>31-03-2016 |
| US 2013214535 | A1 | 22-08-2013 | CN 103154509 A<br>EP 2609326 A2<br>ES 2633816 T3<br>US 2013214535 A1<br>WO 2012025121 A2 | | 12-06-2013<br>03-07-2013<br>25-09-2017<br>22-08-2013<br>01-03-2012 |

EPO FORM P0459

For more details about this annex : see Official Journal of the European Patent Office, No. 12/82

**EP 3 712 430 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120078518 A1
- US 20120078518 A